# FASCICULE DE BREVET EUROPEEN

(11) **EP 0 683 066 B1**
(45) Date de publication et mention de la délivrance du brevet: **29.07.1998**
(21) Numéro de dépôt: 95401174.8
(22) Date de dépôt: 19.05.1995
(51) Int. Cl.: B60N 2/12

(54) **Glissière à mémoire notamment pour siège de véhicule**
Positionsspeicherungsschiene, insbesondere für Fahrzeugsitz
Memory lock slide, in particular for vehicle seats

(30) Priorité: 20.05.1994 FR 9406195
(43) Date de publication de la demande: 22.11.1995
(73) Titulaire: CESA COMPAGNIE EUROPEENNE DE SIEGES POUR AUTOMOBILES, 92307 Levallois-Perret Cédex (FR)
(72) Inventeur: Delatte, Olivier Renaud, F-45200 Montargis (FR)
(74) Mandataire: Moncheny, Michel

(56) Documents cités:
- DE-A- 3 031 610
- GB-A- 2 033 738
- GB-A- 2 255 903
- US-A- 4 881 774

## Description

La présente invention concerne les glissières comprenant un élément fixe et un élément mobile aptes coulisser relativement l'un à l'autre selon une direction de translation et, plus particulièrement, une glissière perfectionnée à mémoire utilisable notamment pour un siège de véhicule automobile par exemple terrestre.

Comme on le sait, les sièges de véhicules automobiles terrestres sont habituellement montés sur le sol ou plancher d'un véhicule qui les reçoit par l'entremise de glissières, le plus souvent latérales. Ces glissières latérales autorisent un réglage longitudinal du siège qui permet à son occupant de choisir la position adaptée à sa morphologie et à la géométrie du véhicule, qui lui assure le maximum de confort pour y voyager ou bien pour piloter le véhicule selon son style de conduite.

Certaines de ces glissières sont équipées d'une "mémoire" qui sert de butée réglable dont la localisation est fixée en fonction de la position de réglage du siège adoptée par son occupant. Ces glissières à mémoire sont habituellement utilisées dans les véhicules dit de "tourisme" à une seule porte latérale par côté, notamment du type "coupé" ou "cabriolet" par exemple. Comme on le sait, pour ce type de véhicule il est nécessaire de déplacer un siège avant pour accéder au volume situé à l'arrière des sièges avant. Le plus souvent, ce déplacement consiste en au moins une avance du siège en direction de l'avant ou du tableau de bord du véhicule, à fond de course des glissières. Lors de la remise en place du siège, on n'est pas certain que celui-ci reprenne automatiquement sa position de réglage antérieure choisie qu'il occupait précédemment. Ceci est particulièrement désagréable et malcommode lorsqu'il s'agit du siège du conducteur, puisque à chaque fois le conducteur doit s'assurer de la position reprise par le siège et, au besoin, la retoucher. Pour éviter ce type d'inconvénient, on utilise des glissières à mémoire. Les glissières à mémoire fonctionnent d'une manière telle qu'une fois le réglage en position longitudinale du siège fait selon les souhaits de son occupant, lorsqu'on avance le siège pour donner accès à l'arrière de celui-ci et qu'on recule ensuite le siège pour y prendre place, le siège retrouve automatiquement la position antérieure dans laquelle il avait été place.

Une glissière à mémoire est, par exemple décrite dans le document FR-A-2 631 592 auquel on pourra se reporter utilement pour plus amples informations.

Que les glissières soient ou non à mémoire, elles sont soumises à des efforts importants en particulier lorsque le siège est équipé d'une ceinture de sécurité du type totalement ou partiellement "embarquée". L'expression "ceinture embarquée" désigne habituellement une ceinture de sécurité dont les points d'ancrage, habituellement trois, sont tels que l'un au moins d'entre eux n'est pas solidaire de la coque ou structure du véhicule comme cela est généralement le cas, mais au contraire est ancré directement ou indirectement sur le siège. Pour un siège équipé d'une ceinture de sécurité embarquée, les efforts que doit subir et transmettre la ceinture de sécurité en cas de choc à grande composante longitudinale, repérée par rapport au véhicule, sont donc répercutés à la structure du véhicule, par exemple à son plancher, par l'entremise des glissières. On comprend immédiatement que les glissières qui supportent le siège et qui sont interposées entre celui-ci et le plancher, doivent pouvoir subir non seulement les efforts normaux liés au réglage et à l'occupation du siège mais aussi ceux, exceptionnels, qui résultent de tels chocs, sans que pour autant la sécurité de son occupant soit compromise.

Ce type de problème est particulièrement délicat à résoudre lorsqu'on sait que, pour des raisons d'encombrement, de poids et de coût de production de telles glissières doivent être de dimensions particulièrement réduites, d'une petite masse et d'un prix de revient modique, et pourtant satisfaire aux normes de sécurités édictées par des organismes professionnels ou les Pouvoirs Publics. Une glissière qui satisfait à de tels impératifs est, par exemple, décrite dans le document FR-93-10747 (FR-A-2 709 710, correspondant à EP-A-0 642 946) déposé par la Demanderesse auquel on pourra se reporter utilement pour plus amples informations.

On comprend donc qu'une glissière pour une telle application doit satisfaire à des conditions parfois contradictoires qu'il n'est donc pas aisé de satisfaire.

US-A-4 881 774 décrit une glissière à mémoire notamment pour siège de véhicule avec une assise et un dossier articulés entre eux, comprenant un élément fixe et un élément mobile aptes à coulisser relativement selon une direction de translation, un verrou d'immobilisation avec une gâche qui est associée à l'élément fixe et avec un pêne qui coopère avec une gâche pour s'y verrouiller ou s'en déverrouiller, glissière où le pêne est monté sur l'élément mobile pour être mobile avec lui et dans un plan parallèle à cette direction entre une position normalement verrouillée où il est en prise avec la gâche et une position déverrouillée à volonté où il est dégagé de la gâche, et qui comprend en outre une butée-mémoire avec un réceptacle qui est associé à l'élément fixe et avec un loquet qui coopère avec ce réceptacle pour s'y accoupler ou s'en désaccoupler et qui est associé à l'élément mobile pour être, d'une part, mobile dans un plan parallèle à cette direction entre une position normalement enclenchée où il est en prise avec le réceptacle et une position déclenchée à volonté où il est dégagé du réceptacle et être solidarisé à l'élément mobile afin de pouvoir se déplacer avec lui dans les deux sens de la direction pour opérer un réglage longitudinal du siège et, d'autre part, rester immobile dans la position enclenchée où il est en prise avec le réceptacle et à être désolidarisé de l'élément mobile alors que le verrou est en position déverrouillée le pêne dégagé de la gâche afin de rester fixe et à permettre un déplacement de l'élément mobile dans une seul sens de la direction pour accéder à l'arrière du siège, une commande apte à agir à la fois sur le verrou et la mémoire-butée pour simultanément dégager le pêne de la gâche et le loquet du réceptacle afin de déverrouiller le verrou et solidariser à l'élément mobile la butée mémoire désaccouplée pour autoriser un réglage longitudinal du siège, et un asservissement apte à agir seulement sur le verrou pour dégager le pêne de la gâche afin de déverrouiller le verrou tout en laissant le loquet en prise avec le réceptacle en position enclenchée et désolidarisé de l'élément mobile pour autoriser un déplacement dans un sens selon cette direction du siège sans perte de la position de réglage choisie.

Le but de l'invention est de construire une glissière perfectionnée à mémoire notamment pour siège de véhicule, par exemple automobile terrestre, qui convienne notamment pour un siège équipé d'une ceinture de sécurité au moins partiellement embarquée.

L'invention a pour objet une glissière du type décrit dans US-A-4 881 774, caractérisée en ce que le pêne du verrou et le loquet de la mémoire-butée sont disposés à l'intérieur de la glissière et en ce que le pêne du verrou et le loquet de la mémoire-butée sont montés sur un axe commun qui est porté par l'élément mobile et qui est orienté orthogonalement à la direction de translation, et sont sollicités élastiquement pour venir normalement en prise avec la gâche et le réceptacle respectivement.

D'autres caractéristiques de l'invention ressortiront de la lecture de la description et des revendications qui suivent ainsi que de l'examen des figures du dessin, donné seulement à titre d'exemple, où :
- la Figure 1 est une vue perspective schématique d'un mode de réalisation d'une glissière perfectionnée selon l'invention avec des écorchés locaux, dont les différents constituants ne sont pas dessinés à l'échelle pour faciliter la représentation et,
- les Figures 2 à 13 sont des vues schématiques partielles en élévation latérale, du mode de réalisation de la Figure 1, représentant une glissière selon l'invention dans différentes phases de son fonctionnement.

Les glissières en général, et les glissières à mémoire en particulier notamment celles utilisées pour équiper des sièges de véhicules par exemple automobiles terrestres ainsi que les sièges destinés à être montés à bord de tels véhicules étant bien connus dans la technique, on ne décrira dans ce qui suit que ce qui concerne directement ou indirectement l'invention. Pour le surplus l'Homme du Métier du secteur technique considéré puisera dans les solutions classiques courantes à sa disposition pour faire face aux problèmes particuliers auxquels il est confronté. En particulier il pourra se reporter utilement aux documents précités.

Dans ce qui suit on utilise toujours un même numéro de référence pour identifier un élément homologue quel que soit le mode de réalisation ou sa variante d'exécution.

Pour la commodité de l'exposé on décrira successivement chacun des constituants d'une glissière perfectionnée à mémoire selon l'invention avant d'en exposer au besoin la fabrication, le montage et le fonctionnement.

Une glissière perfectionnée selon l'invention comprend, essentiellement, un élément 10 fixe ou coulisse, un élément 20 mobile ou curseur, un verrou d'immobilisation 30, une mémoire-butée 40, une commande 50 et un asservissement 60.

L'élément fixe 10 se présente d'une manière générale à la façon d'une règle ou similaire qui, en section droite, a approximativement la configuration d'un C horizontal lorsqu'elle est normalement mise en place sur un sol ou plancher d'un véhicule. Cet élément fixe 10 présente une fente 101 béante bordée de part et d'autre de lèvres 102 dirigée vers l'intérieur. Un dispositif de fixation 103 tel que par exemple des vis, boulons, rivets, etc maintient en place l'élément fixe sur le plancher. L'élément fixe 10 définit une direction 100 de translation habituellement parallèle à l'axe longitudinal traditionnel d'un véhicule. Cette direction de translation est obtenue à l'aide de moyens de guidage 11 tels que par exemple des chemins en V aptes à recevoir des corps roulants 110 telles que des billes ou analogues au besoin logés dans une cage appropriée. S'il y a lieu et de préférence, un renfort 12 est placé dans l'élément fixe 10 à l'opposé et en regard de la fente 101 pour les raisons qui apparaîtront par la suite. Ce renfort 12 se présente par exemple à la manière d'une barre plate avec deux tranches 121 et 122 opposées.

L'élément mobile 20 se présente d'une manière générale à la façon d'une règle ou similaire qui, en section droite, a approximativement une configuration en W inversé lorsqu'il est mis en place. L'élément mobile 20 présente un appui 201 transpercé au moins localement d'un orifice 2010 pour les raison que l'on comprendra par la suite. L'élément mobile 20 comprend aussi des contre lèvres 202 destinées à coopérer avec les lèvres 102 de l'élément fixe 10, et des moyens de guidage 21 complémentaires des moyens de guidage 11 de l'élément fixe 10. L'élément mobile 20 porte aussi un axe 22 pratiquement orthogonal à la direction 100 et un support 23 fait d'un socle 231 destiné à reposer sur l'appui 201 de l'élément mobile et d'une aile 232 qui reçoit le siège proprement dit par exemple une partie de son armature d'assise.

Le verrou d'immobilisation 30 comprend une gâche 31 qui est associée à l'élément fixe 10 et un pêne 32 qui coopère avec la gâche 31 pour s'y verrouiller ou s'en déverrouiller afin d'immobiliser ou de libérer, respectivement, relativement l'un à l'autre l'élément fixe 10 et l'élément mobile 20. La gâche 31 se présente par exemple à la manière d'une denture 311 en créneau faite d'une succession de merlons et d'embrasures régulièrement distribués sur la tranche 121 du renfort 12. Le pêne 32 se présente à la manière d'un levier 320 de préférence coudé qui est muni à l'une de ses extrémités d'au moins une dent 321 destinée à coopérer avec la denture 311, d'un palier 322 fermé destiné à coopérer avec l'axe 22 et situé à proximité de son coude, et d'une portée 323 par exemple sous la forme d'un galet mobile, placée à proximité de l'autre de ses extrémités. Une sollicitation élastique 33 tel qu'un ressort fixé au pêne agit sur celui-ci afin de le maintenir normalement dans une position verrouillée où il est en prise avec la gâche 31. On comprend donc qu'ainsi le pêne 32 est monté sur l'élément mobile 20 pour être mobile avec lui et dans un plan parallèle à cette direction 100, entre une position normalement verrouillée où il est en prise avec la gâche 31 et une position déverrouillée où il est dégagé de la gâche 31.

La butée-mémoire 40 comprend un réceptacle 41 tel que par exemple une denture 41 en créneau faite d'une succession de merlons et d'embrasures régulièrement distribués sur la tranche 122 du renfort 12. Pour les raisons que l'on comprendra par la suite les pas des dentures 311 et 411 sont égaux ou un multiple de l'un de l'autre. La mémoire butée 40 comprend aussi un loquet 42 avec à un bout un épaulement 421 fait d'un pied 4211 et d'un méplat 4212, avec en position intermédiaire un palier 422 ouvert, tel que par exemple une encoche, destiné à recevoir l'axe 22 et délimitant une potence 4222, et avec à un autre bout au moins un bec 423 destiné à coopérer avec la denture 41. Une sollicitation élastique 43, tel un ressort de rappel fixé au loquet, agit sur ce dernier de manière à le maintenir normalement en prise avec le réceptacle. On comprend donc que le loquet 42 est associé à l'élément mobile 20 pour être mobile, dans un plan parallèle à la direction 100 entre une position normalement enclenchée où il est en prise avec le réceptacle 41 et une position déclenchée où il peut être dégagé du réceptacle et être solidarisé à l'élément mobile 20 afin de pouvoir se déplacer avec lui dans les deux sens de la direction pour opérer un réglage longitudinal du siège. On comprend aussi que le loquet 42 peut rester immobile dans la position enclenchée où il est en prise avec le réceptacle 41 et être désolidarisé de l'élément mobile 20 alors que le verrou est en position déverrouillée le pêne 32 dégagé de la gâche 31 afin de rester fixe du fait de la configuration du palier ouvert 422 qui permet un déplacement de l'élément mobile 20 dans un seul sens de la direction pour accéder à l'arrière du siège.

La commande 50 apte à agir simultanément sur le verrou 30 et la mémoire-butée 40 comprend une poignée 51 telle que par exemple un palonnier, une barre 52 et une palette 53. La poignée 51 est montée sur un axe 510 porté par l'aile 232 du support 23 de manière à pouvoir basculer relativement à ce dernier. La barre 52 d'actionnement est contrecoudée dans un plan de manière à ménager un pont 521 et est pliée à l'équerre de manière à ménager un embout 522. La palette 53 est montée sur un axe 530 porté par l'aile 232 du support 23 de manière à pouvoir basculer. Cette palette 53 présente un flanc 531 destiné à coopérer avec le pont 521 de la barre 52, une patte 532 de préférence doublement pliée destinée à coopérer avec la potence 4222, une came 533 avec un profil 5330 et un dégagement 5331 et destinée à coopérer avec la portée 323 du péne 32. Dans la palette 53 est aussi ménagée une boutonnière 534 en arc de cercle sur laquelle on reviendra par la suite. Un ressort 54 bistable agit sur la palette de manière à la maintenir à l'une ou l'autre des deux extrémités de sa course lorsqu'elle bascule sur l'axe 530 pour les raisons que l'on comprendra par la suite. Ce ressort 54 est, par exemple un ressort à boudin à spires hélicoïdales agissant par traction, dont une des extrémités est ancrée par exemple dans un trou de l'aile du support et dont l'autre des extrémités est ancrée par exemple sur une languette pliée à l'équerre de la palette. Les points d'ancrage sont disposés de telle manière que lorsque la palette occupe l'une ou l'autre des extrémités de sa course, la ligne d'action du ressort est à l'écart de son axe de basculement 530 et n'intercepte cet axe pour définir un point d'équilibre métastable que pour passer de l'une à l'autre des positions. Le ressort prend son élongation maximale au franchissement de la position d'équilibre métastable.

L'asservissement 60 est apte à agir seulement sur le verrou 30 pour dégager le pêne 32 de la gâche 31 afin de déverrouiller le verrou 30 tout en laissant le loquet 42 en prise avec le réceptacle 41 en position enclenchée et désolidarisé de l'élément mobile 20 pour autoriser un déplacement dans un sens du siège, sans perte de la position de réglage choisie, comme on le comprendra par la suite. L'asservissement 60 se présente à la manière d'une timonerie 61 et est par exemple rigide et faite d'au moins une tringle articulée comme illustré, ou bien est par exemple souple et faite d'un câble dans une gaine connue dans la technique sous la désignation de Bowden. Cette timonerie comprend un bout 611 relié au dossier D du siège à proximité d'une articulation C qui lui permet de basculer relativement à l'assise A comme on le comprendra par la suite. L'autre bout 612 de la timonerie est muni d'un doigt 614 ou similaire engagé dans la boutonnière 534.

Tous les constituants d'une glissière perfectionnée selon l'invention sont fabriqués par exemple en métal ou en résine synthétique dont les propriétés sont par exemple modifiées à l'aide de charges ou de fibres appropriées. Ces matériaux sont mis en forme et ouvrés selon des techniques traditionnelles convenablement adaptées.

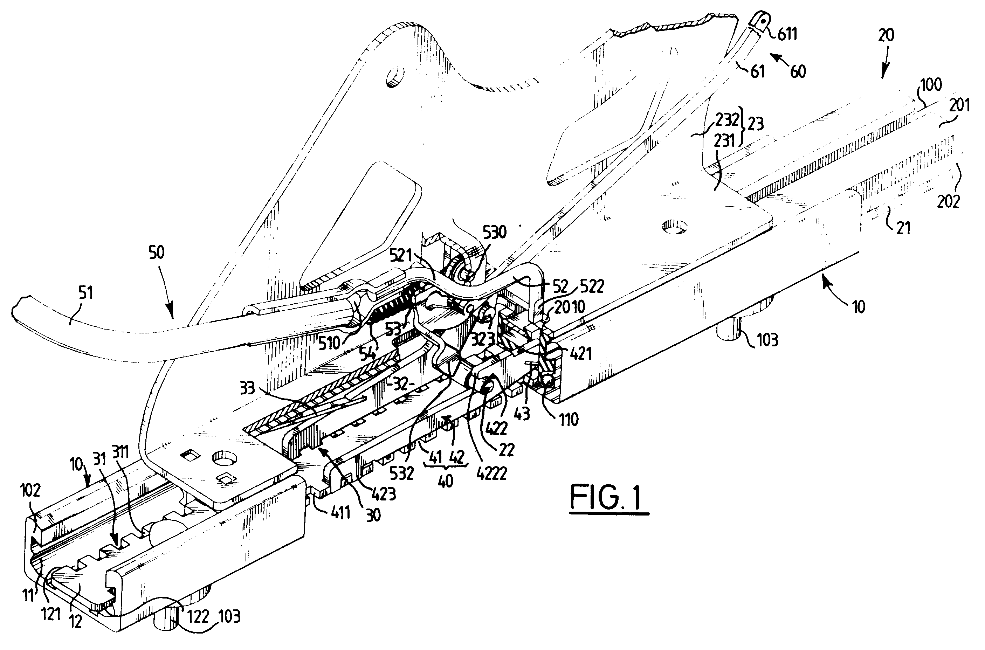

Tous ces constituants sont réunis, assemblés et montés comme cela ressort particulièrement bien de l'examen des figures du dessin et en particulier de la figure 1.

On supposera qu'une glissière perfectionnée selon l'invention est montée dans un véhicule automobile terrestre et toutes les indications données relatives à une orientation telle que haut, bas, avant, arrière, latéral, longitudinal, transversal, vertical sont données par rapport aux axes traditionnels de repérage d'un véhicule en supposant que le siège lorsqu'il est occupé fait face à la route et que son occupant est dirigé face au pare-brise du véhicule. Un tel siège comprend une assise A et un dossier D dont les armatures sont réunies par une articulation C de manière que l'on puisse rabattre au moins partiellement le dossier contre l'assise afin de faciliter l'accès à ce qui se trouve à l'arrière du siège, comme il est classique pour les véhicules dits "coupés" ou "cabriolets". Cette articulation est s'il y a lieu confondue avec celle qui permet le réglage de l'inclinaison du dossier relativement à l'assise ou le changement de position de ce dernier, comme il est bien connu. Un tel rabattement ou basculement s'obtient le plus souvent en agissant sur un loqueteau de décondamnation placé sur le côté du siège orienté vers l'extérieur du véhicule de manière à être à portée de main d'un utilisateur. La poignée de la commande qui sert à régler la position longitudinale du siège selon le souhait de son occupant est habituellement placée à portée de main de celui-ci, souvent à proximité de l'assise du siège. Tout ceci est classique et on ne s'y étendra pas davantage.

On supposera qu'initialement le siège occupe la position où il est dessiné sur les Figures 1, 2 et 12, c'est à dire que son dossier est redressé et qu'il est apte à recevoir un occupant.

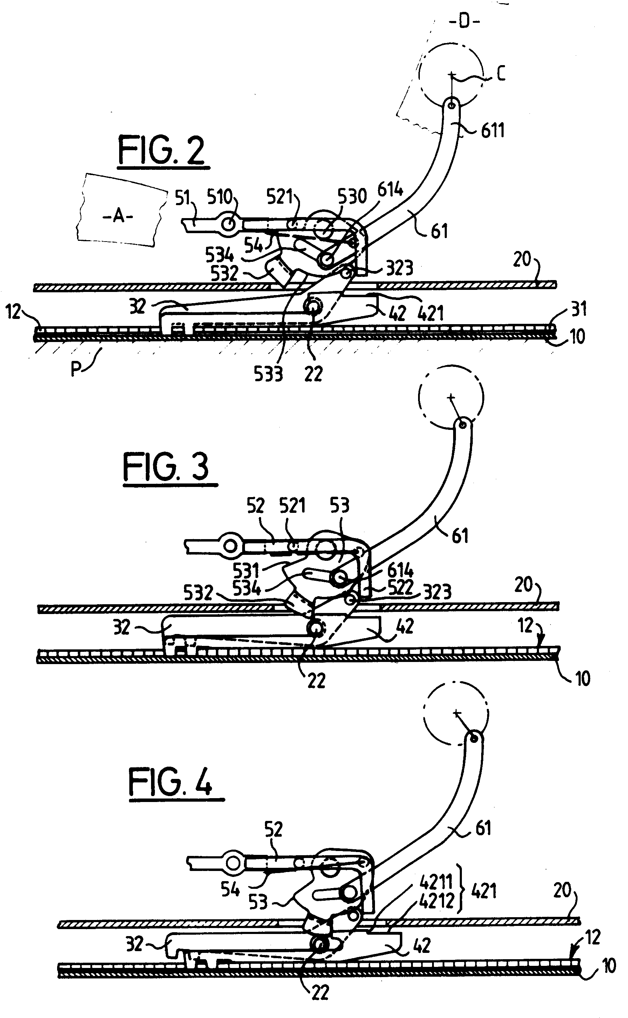

Si l'on souhaite accéder à ce qui se trouve à l'arrière du siège on n'a pas à agir sur la commande. Il suffit seulement d'agir sur le loqueteau traditionnel pour pouvoir rabattre au moins partiellement le dossier vers l'avant en direction de l'assise, à partir de la position illustrée sur les Figures 1 et 2.

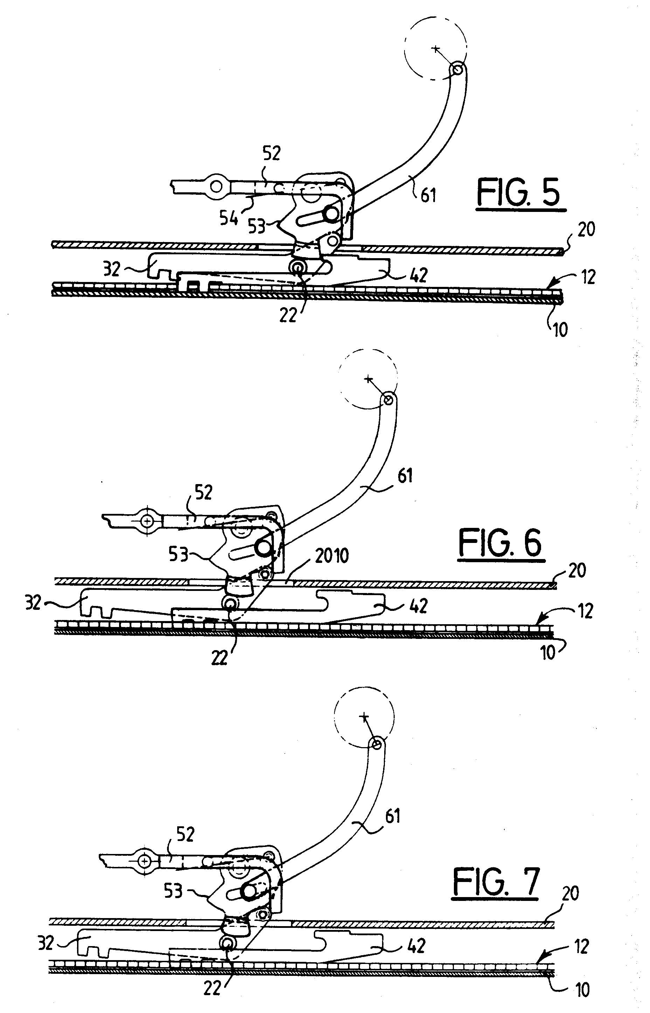

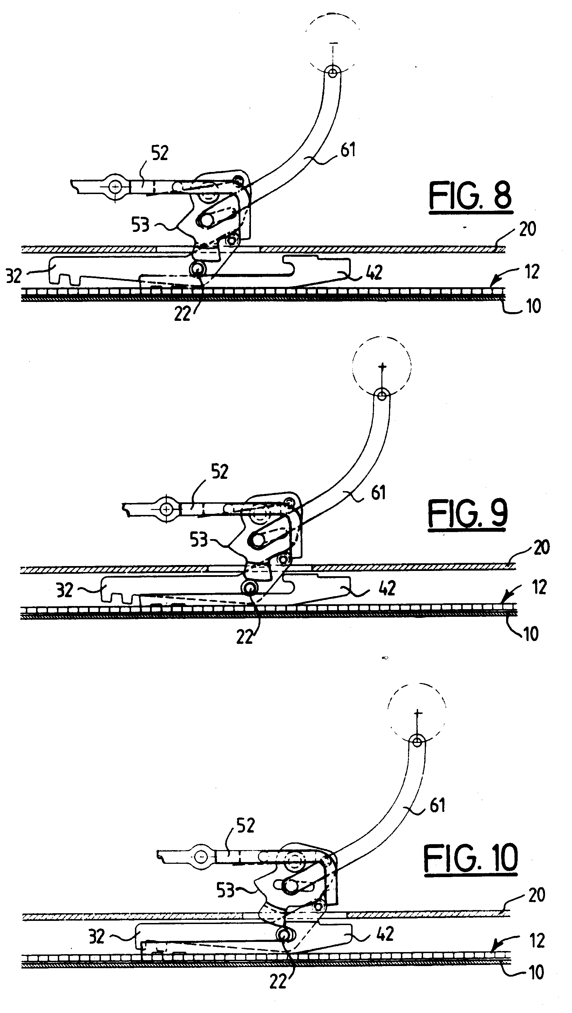

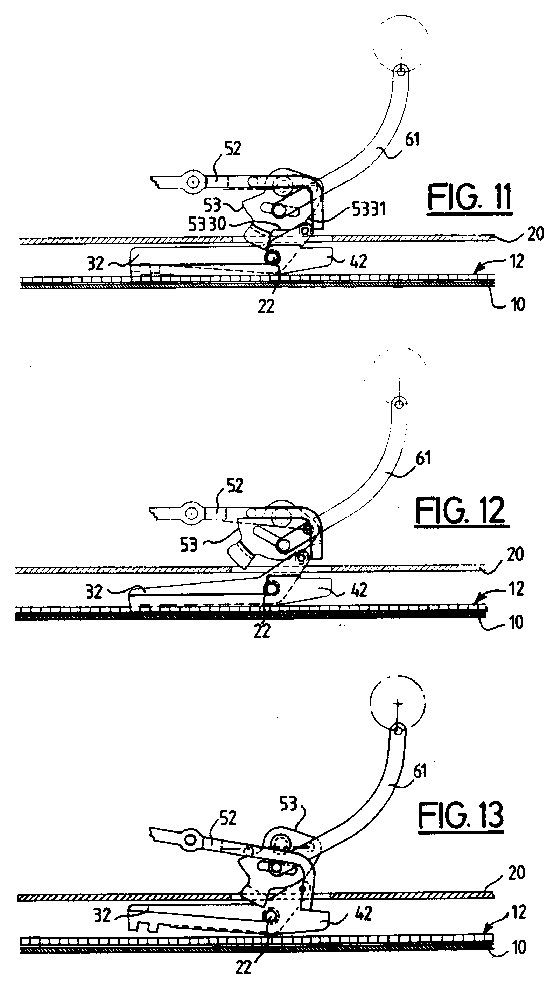

Lorsque le dossier est rabattu d'un angle déterminé par exemple après une course angulaire de l'ordre de 45° dans le sens anti-horaire, la timonerie transmet sa rotation à la palette par l'intermédiaire du doigt qui est en appui contre le fond de l'extrémité droite de la boutonnière. La palette bascule alors dans le sens anti-horaire sur son axe sans que son flanc agisse sur le pont de la barre. Comme précédemment indiqué, en basculant la palette par l'intermédiaire de sa came qui agit sur la portée en galet du pêne fait basculer celui-ci dans le sens horaire sur l'axe 22 afin de le dégager de la gâche. On observera toutefois que dans cette situation la course angulaire de la palette est plus grande que pour un réglage longitudinal et que dans cette situation le ressort bistable retient la palette dans sa position basculée. On observera aussi que lorsqu'on bascule le dossier par rapport à l'assise et qu'on le rabat vers l'avant, on a tendance à entraîner un peu le siège dans ce sens. On observera en outre que si la patte rencontre la potence du loquet ceci ne fait qu'amorcer l'avance du siège sans l'entraver. Cette phase du fonctionnement est illustrée sur les Figures 3 à 5. Le loquet étant en prise avec son réceptacle car maintenu en place par son ressort de rappel, on peut avancer le siège pour accéder à ce qui se trouve à l'arrière de celui-ci. En effet, le palier du loquet étant ouvert, l'axe 22 commun au pêne et au loquet peut se dégager de ce dernier et s'en désolidariser tout en le laissant en prise avec son réceptacle alors que le pêne est dégagé de la gâche. Le siège peut donc avancer avec son verrou d'immobilisation alors que la mémoire butée demeure en place. Cette phase du fonctionnement est illustrée sur la Figure 6. Si maintenant on veut remettre le siège à la position initiale qu'il occupait auparavant, on commence habituellement à relever le dossier qui se reverrouille automatiquement sur l'assise. Cette manoeuvre est sans influence sur la suite des opérations du fait de la liaison à boutonnière et doigt de l'asservissement. En effet, le doigt entraîné par la timonerie elle-même entraînée par le dossier, glisse dans la boutonnière convenablement adaptée. La palette reste donc provisoirement dans la position basculée qu'elle occupait et lorsque le siège revient à proximité de la position qu'il occupait antérieurement, l'axe commun s'engage à nouveau dans le palier ouvert du loquet et, simultanément, la patte de la palette rencontre la potence du loquet ce qui a pour effet de faire basculer la palette dans le sens horaire. Cette phase du fonctionnement est illustrée sur les Figures 7 à 10. Le ressort bistable achève le mouvement de retour de la palette en position de repos initial. Ceci a pour résultat de faire revenir le pêne en position verrouillée sous l'action de sa sollicitation élastique. La portée du pêne se trouve donc de nouveau en regard du dégagement de la came. Le siège est de nouveau verrouillé dans la position qu'il occupait initialement. Cette phase du fonctionnement est illustrée sur les Figures 11 et 12.

Si l'on veut modifier la position longitudinale qu'occupe le siège, on agit sur la poignée, par exemple en la soulevant pour la faire basculer dans le sens horaire. Lorsqu'on fait ceci l'embout de la barre rencontre le méplat de l'épaulement du loquet qui bascule alors sur l'axe 22 dans le sens des aiguilles d'une montre. De la sorte ses becs se dégagent de la denture. Simultanément le pont de la barre rencontre le flanc de la palette et la fait basculer dans le sens anti-horaire sur son axe 530. En basculant, le profil de la came de la palette rencontre le galet de la portée que porte le levier du pêne qu'elle fait basculer dans le sens horaire en dégageant ses dents de la denture. Ceci est illustré sur la Figure 13. On voit donc que le pêne n'est plus en prise avec la gâche et qu'il en est de même du loquet avec son réceptacle. On observera toutefois que, à la fois, le pêne et le loquet sont solidaires de l'élément mobile. En effet bien que le palier du loquet est ouvert, le loquet est doublement emprisonné, d'une part, par l'embout de la barre qui est en appui simultanément sur le méplat et le pied de l'épaulement du loquet et, d'autre part, par la patte de la palette qui est en appui contre la potence de l'encoche du palier du loquet. Que l'on avance ou que l'on recule le siège et donc l'élément mobile, le pêne et le loquet sont entraînés par l'élément mobile et le suivent dans ses déplacements. Lorsque le siège occupe la position souhaitée et qu'on relâche la poignée de la commande le péne et le loquet rappelés par leurs sollicitations élastique s'engagent de nouveau dans la gâche et le réceptacle, respectivement. Le siège se trouve donc immobilisé dans la nouvelle position recherchée.

On observera qu'au cours de cette manoeuvre, les déplacements de la palette n'ont pas été perturbés par l'asservissement du fait de la liaison par boutonnière et doigt de l'asservissement.

Comme on le sait un siège est habituellement équipé de deux glissières, une de chaque côté, et il suffit que l'une de celles-ci soit conforme à l'invention.

On observera qu'il est facile de transformer une telle glissière à mémoire pour supprimer cette fonction. Il suffit par exemple de ne pas monter de loquet et de palette et de modifier en conséquence la barre de la commande afin que celle-ci agisse directement sur le pêne.

L'élément fixe et l'élément mobile peuvent être par exemple fabriqués dans un alliage à base d'aluminium et obtenus par extrusion dans une filière à la configuration souhaitée. La présence des lèvres et contre-lèvres permet d'absorber et/ou de transmettre des efforts à composantes verticales et/ou transversales sans risques de déboîtement de l'élément mobile ou de l'élément fixe.

Les billes des moyens de guidage peuvent être faites en métal ou en matière synthétique.

Le renfort au lieu d'être fait à base d'un métal léger peut être fait en acier de manière à être en mesure de supporter des efforts à grandes composantes longitudinales du type de ceux qui résultent de chocs violents, frontaux ou postérieurs.

Le fait que le pêne du verrou et le loquet de la butée-mémoire soient disposés à l'intérieur de la glissière, de même qu'une grande partie du mécanisme, fait que grâce à l'invention on obtient un encombrement minimal et, si nécessaire, une résistance importante au flambement des pêne et loquet.

Ce qui précède met bien en lumière les particularités distinctives de l'invention l'intérêt qu'elle offre et les avantages qu'elle procure.

## Revendications

1. Glissière à mémoire notamment pour siège de véhicule avec une assise et un dossier articulés entre eux, comprenant un élément (10) fixe et un élément (20) mobile aptes à coulisser relativement selon une direction (100) de translation, un verrou (30) d'immobilisation avec une gâche (31) qui est associée à l'élément fixe (10) et avec un pêne (32) qui coopère avec une gâche (31) pour s'y verrouiller ou s'en déverrouiller, glissière où le pêne (32) est monté sur l'élément mobile (20) pour être mobile avec lui et dans un plan parallèle à cette direction (100) entre une position normalement verrouillée où il est en prise avec la gâche (31) et une position déverrouillée à volonté où il est dégagé de la gâche (31), et qui comprend en outre une butée-mémoire (40) avec un réceptacle (41) qui est associé à l'élément fixe (10) et avec un loquet (42) qui coopère avec ce réceptacle (41) pour s'y accoupler ou s'en désaccoupler et qui est associé à l'élément mobile (20) pour être, d'une part, mobile dans un plan parallèle à cette direction entre une position normalement enclenchée où il est en prise avec le réceptacle (41) et une position déclenchée à volonté où il est dégagé du réceptacle (41) et être solidarisé à l'élément mobile (20) afin de pouvoir se déplacer avec lui dans les deux sens de la direction pour opérer un réglage longitudinal du siège et, d'autre part, rester immobile dans la position enclenchée où il est en prise avec le réceptacle (41) et à être désolidarisé de l'élément mobile (20) alors que le verrou (30) est en position déverrouillée le pêne (32) dégagé de la gâche (31) afin de rester fixe et à permettre un déplacement de l'élément mobile (20) dans une seul sens de la direction pour accéder à l'arrière du siège, une commande (50) apte à agir à la fois sur le verrou (30) et la mémoire-butée (40) pour simultanément dégager le pêne (32) de la gâche (31) et le loquet (42) du réceptacle (41) afin de déverrouiller le verrou (30) et solidariser à l'élément mobile (20) la butée mémoire (40) désaccouplée pour autoriser un réglage longitudinal du siège, et un asservissement (60) apte à agir seulement sur le verrou (30) pour dégager le pêne (32) de la gâche (31) afin de déverrouiller le verrou (30) tout en laissant le loquet (42) en prise avec le réceptacle (41) en position enclenchée et désolidarisé de l'élément mobile (20) pour autoriser un déplacement dans un sens selon cette direction (100) du siège sans perte de la position de réglage choisie et qui est caractérisée en ce que le pêne (32) du verrou (30) et le loquet (42) de la mémoire butée (40) sont disposés à l'intérieur de la glissière (10, 20) et en ce que le péne (32) du verrou (30) et le loquet (42) de la mémoire-butée (40) sont montés sur un axe (22) commun qui est porté par l'élément mobile (20) et qui est orienté orthogonalement à la direction de translation (100), et sont sollicités élastiquement pour venir normalement en prise avec la gâche (31) et le réceptacle (41) respectivement.

2. Glissière selon la revendication 1 caractérisée en ce que la commande (50) comprend une poignée de manoeuvre (51) montée sur un axe (510), une barre d'actionnement (52) fixée à la poignée (51) et apte à coopérer avec le loquet (42) pour le dégager de son réceptacle (41), une palette (53) montée sur un axe (530) et apte à coopérer avec la barre d'actionnement (52) pour déplacer le pêne (32) afin de le dégager de sa gâche (31), et avec le loquet (42) dégagé pour le solidariser à l'élément mobile (20).

3. Glissière selon la revendication 2 caractérisée en ce que la palette (53) comprend un flanc (531) apte à coopérer avec un pont (521) de la barre (52), une patte (532) apte à coopérer avec une potence (4222) du loquet (42), une came (533) apte à coopérer avec une portée (323) du pêne (32), et une boutonnière (534).

4. Glissière selon l'une quelconque des revendications 1 à 3 caractérisée en ce que l'asservissement (60) comprend une timonerie (61) dont un (611) des bouts est associé au dossier (D) du siège et dont l'autre (612) des bouts est apte à agir sur le verrou (30).

5. Glissière selon la revendication 4 caractérisée en ce que la timonerie (61) agit sur le verrou (30) par l'entremise de la commande (50).

6. Glissière selon la revendication 5 caractérisée en ce que l'un (612) des bouts de la timonerie comprend un doigt (514) engagé dans la boutonnière (534).

7. Glissière selon l'une quelconque des revendications 1 à 6 caractérisée en ce que le pêne (32) est monté sur l'axe (22) à l'aide d'un palier (322) fermé et en ce que le loquet 42 est monté sur l'axe (22) à l'aide d'un palier (422) ouvert dans un sens de la direction de translation (100).

8. Glissière selon l'une quelconque des revendications 1 à 7 caractérisée en ce que la gâche (31) et le réceptacle (41) sont portés par un renfort (12) fixé à l'élément fixe (10).

9. Glissière selon l'une quelconque des revendications 1 à 8 caractérisée en ce que l'élément fixe (10) est muni de lèvres (102) et l'élément mobile (20) est muni de contre-lèvres (202) destinés à coopérer ensemble pour reprendre voire transmettre des efforts orthogonaux à la direction de translation (100).

## Claims

1. A memory lock slide notably for a vehicle seat with a squab and a back hinged together, comprising a fixed element (10) and a movable element (20) slidable relative to one another in a direction (100) of displacement, an immobilising interlocking device (30) with a striking plate (31) which is associated with the fixed element (10) and with a latch arm (32) which co-operates with a striking plate (31) so as to be locked with it or unlocked from it, a slide where the latch arm (32) is mounted on the movable element (20) so as to be movable with this latter and in a plane parallel to this direction (100) between a normally locked position where the latch arm (32) is engaged with the striking plate (31) and a position unlocked at will where the latch arm (32) is disengaged from the striking plate (31), and which memory lock slide also comprises a memory stop (40) with a receiving plate (41) which is associated with the fixed element (10) and with a latch bar (42) which co-operates with this receiving plate (41) so as to be coupled with it or uncoupled from it and which latch bar (42) is associated with the movable element (20) so as to be, on the one hand, movable in a plane parallel to this direction between a normally locked position where the latch bar (42) is engaged with the receiving plate (41) and a position released at will where the latch bar (42) is disengaged from the receiving plate (41), and so as to be connected with the movable element (20) in order to be able to move with it in both directions to effect a longitudinal adjustment of the seat, and on the other hand, to remain fixed in the locked position when it is engaged with the receiving plate (41) and to be disconnected from the movable element (20) when the interlocking device (30) is in an unlocked position, the latch arm (32) being disengaged from the striking plate (31) in order to remain fixed and to permit a displacement of the movable element (20) in one direction in order to access the rear of the seat, a control mechanism (50) able to act at the same time on the interlocking device (30) and the memory stop (40) to simultaneously disengage the latch arm (32) from the striking plate (31) and the latch bar (42) from the receiving plate (41) in order to unlock the interlocking device (30) and to connect the movable element (20) to the memory stop (40), which is uncoupled to enable a longitudinal adjustment of the seat, and an interlock (60) able to act only on the interlocking device (30) to disengage the latch arm (32) from the striking plate (31) in order to unlock the interlocking device (30) while leaving the latch bar (42) engaged with the receiving plate (41) in a locked position and disconnected from the movable element (20) to allow a displacement in one way in this direction (100) of the seat without losing the selected position of adjustment, and which is characterised in that the latch arm (32) of the interlocking device (30) and the latch bar (42) of the memory stop (40) are arranged inside the slide (10, 20), and in that the latch arm (32) of the interlocking device (30) and the latch bar (42) of the memory stop (40) are mounted on a common pin (22) carried by the movable element (20) and which is positioned orthogonally in the direction of displacement (100), and the latch arm of the interlocking device and the latch bar of the memory stop are resiliently stressed to become normally engaged with the striking plate (31) and the receiving plate (41) respectively.

2. A slide according to claim 1 or 2, characterised in that the control mechanism (50) comprises an operating lever (51) mounted on a pin (510), an operating bar (52) fixed to the lever (51) and able to co-operate with the latch bar (42) so as to disengage it from its receiving plate (41), a plate (53) mounted on a pin (530) and able to co-operate with the operating bar (52) to displace the latch arm (32) in order to disengage it from its striking plate (31) and with the latch bar (42) disengaged in order to connect it to the movable element (20).

3. A slide according to claim 2, characterised in that the plate (53) comprises a lateral face (531) able to co-operate with a bridge (521) of the bar (52), a tab (532) able to cooperate with a bracket (4222) of the latch bar (42), a cam (533) able to co-operate with a bearing (323) of the latch arm (32) and a slot (534).

4. A slide according to any one of claims 1 to 3, characterised in that the interlock (60) comprises a linkage (61) of which one (611) of the ends is associated with the seat back (D) and of which the other (612) end is able to act on the interlocking device (30).

5. A slide according to claim 4, characterised in that the linkage (61) acts on the interlocking device (30) via the control mechanism (50).

6. A slide according to claim 5, characterised in that one (612) of the ends of the linkage comprises a finger bar (514 sic. 614) engaged in the slot (534).

7. A slide according to any one of claims 1 to 6, characterised in that the latch arm (32) is mounted on the pin (22) with the aid of a captive bearing (322 sic. 323), in that the latch bar (42) is mounted on the pin (22) with the aid of a bearing (422) open in one direction of displacement (100).

8. A slide according to any one of claims 1 to 7, characterised in that the striking plate (31) and the receiving plate (41) are supported by a reinforcement (12) fixed to the fixed element (10).

9. A slide according to any one of claims 1 to 8, characterised in that the fixed element (10) is provided with rims (102) and the movable element (20) is provided with counter-rims (202) intended to co-operate together to take up, indeed to transmit the stresses orthogonal to the direction of displacement (100).

## Patentansprüche

1. Positionsspeicherungsschiene, insbesonders für einen Fahrzeugsitz mit einer Sitzfläche und einer Lehne, die gelenkig miteinender verbunden sind, aufweisend ein ortsfestes Element (10) und ein bewegliches Element (20), die dafür ausgelegt sind, gegeneinander gemäß einer Translationsrichtung (100) verschoben zu werden, eine Verriegelung (30) zum Feststellen mit einem Schließhaken (31), der mit dem ortsfesten Element (10) verbunden ist, und mit einem Riegel (32), der mit einem Schließhaken (31) zusammenwirkt, um mit ihm verriegelt oder von ihm entriegelt zu werden, bei welcher Schiene der Riegel (32) auf dem beweglichen Element (20) angebracht ist, um mit ihm und in einer zu dieser Richtung (100) parallelen Ebene zwischen einer normal verriegelten Position, in der er mit dem Schließhaken (31) in Eingriff steht, und einer nach Belieben entriegelten Position, in der er vom Schließhaken (31) entkoppelt ist, beweglich zu sein, und die außerdem ein Speicher-Ausrücklager (40) mit einem Auffangboden (41), der mit dem ortsfesten Element (10) verbunden ist, und mit einer Fallklinke (42), die mit diesem Auffangboden (41) zusammenwirkt, um in ihn einzukuppeln oder aus ihm auszukuppeln, und die mit dem beweglichen Element (20) verbunden ist, um einerseits in einer zu dieser Richtung parallelen Ebene zwischen einer normal eingeklinkten Position, in der sie mit dem Auffangboden (41) in Eingriff ist, und einer nach Belieben ausgeklinkten Position, bei der sie vom Auffangboden (41) entkoppelt ist, beweglich zu sein und mit dem beweglichen Element (20) kraftschlüssig verbunden zu sein, um mit ihm nach beiden Seiten der Richtung verschoben werden zu können, um eine Einstellung des Sitzes in Längsrichtung zu bewirken, und um andererseits in der eingeklinkten Position, in der sie mit dem Auffangboden (41) in Eingriff steht, unbeweglich zu bleiben und vom beweglichen Element (20) entkoppelt zu sein, wenn die Verriegelung (30) in der Entriegelungsposition ist, bei der der Riegel (32) vom Schließhaken (31) entkoppelt ist, um ortsfest zu bleiben, und eine Verschiebung des beweglichen Elements (20) nach nur einer Seite der Richtung zu erlauben, um Zugang zur Rückseite des Sitzes zu erhalten, eine Führung (50), die geeignet ist, gleichzeitig auf die Verriegelung (30) und das Speicher-Ausrücklager (40) einzuwirken, um gleichzeitig den Riegel (32) vom Schließhaken (31) und die Fallklinke (42) vom Auffangboden (41) zu entkoppeln, um die Verriegelung (30) zu entriegeln und das entkoppelte Speicher-Ausrücklager (40) mit dem beweglichen Element (20) kraftschlüssig zu verbinden, um eine Einstellung des Sitzes in Längsrichtung zu ermöglichen, und eine Regelung (60) aufweist, die geeignet ist, nur auf die Verriegelung (30) einzuwirken, um den Riegel (32) vom Schließhaken (31) zu entkoppeln, um die Verriegelung (30) zu entriegeln, wobei gleichzeitig die Fallklinke (42) mit dem Auffangboden (41) in der eingeklinkten Position in Eingriff gelassen und vom beweglichen Element (20) freigelassen wird, um eine Verschiebung des Sitzes nach einer Seite gemäß dieser Richtung (100) ohne Verlust der gewählten Einstellposition zuzulassen, und die dadurch gekennzeichnet ist, daß der Riegel (32) der Verriegelung (30) und die Fallklinke (42) des Speicher-Ausrücklagers (40) im Inneren der Schiene (10, 20) angeordnet sind, und dadurch, daß der Riegel (32) der Verriegelung (30) und die Fallklinke (42) des Speicher-Ausrücklagers (40) auf einer gemeinsamen Achse (22), die vom beweglichen Element (20) getragen ist und die onthogonal zur Translationsrichtung (100) ausgerichtet ist, angebracht sind und elastisch vorgespannt sind, um normal mit dem Schließhaken (31) bzw. dem Auffangboden (41) in Eingriff zu gelangen.

2. Schiene nach Anspruch 1, dadurch gekennzeichnet, daß die Führung (50) einen auf einer Achse (510) angebrachten Bedienungshebel (51), eine Betätigungsstange (52), die am Habel (51) befestigt ist und dafür geeignet ist, mit der Fallklinke (42) zusammenzuwirken, um sie von ihrem Auffangboden (41) zu entkoppeln, einen Anker (53), der auf einer Achse (530) angebracht ist und dafür geeignet ist, mit der Betätigungsstange (52) zum Verschieben des Riegels (32) zusammenzuwirken, um ihn von seinem Schließhaken (31) zu entkoppeln, und mit der entkoppelten Fallklinke (42) zusammenzuwirken, um sie mit dem beweglichen Element (20) kraftschlüssig zu verbinden, aufweist.

3. Schiene nach Anspruch 2, dadurch gekennzeichnet, daß der Anker (53) eine Flanke (531), die dafür geeignet ist, mit einer Brücke (521) der Stange (52) zusammenzuwirken, eine Klaue (532), die dafür geeignet ist, mit einem Arm (4222) der Fallklinke (42) zusammenzuwirken, eine Nocke (533), die dafür geeignet ist, mit einer Lagerfläche (323) des Riegels (32) zusammenzuwirken, und eine längliche Aussparung (534) aufweist.

4. Schiene nach einem der Ansprüche 1 bis 3, dadurch gekennzeichnet, daß die Regelung (60) ein Gestänge (61) aufweist, dessen eines Ende (611) mit der Lehne (D) des Sitzes verbunden ist und dessen anderes Ende (612) dafür geeignet ist, auf die Verriegelung (30) einzuwirken.

5. Schiene nach Anspruch 4, dadurch gekennzeichnet, daß das Gestänge (61) mittels der Führung (50) auf die Verriegelung (30) einwirkt.

6. Schiene nach Anspruch 5, dadurch gekennzeichnet, daß das eine Ende (612) des Gestänges einen Zapfen (514) aufweist, der in die längliche Aussparung (534) eingreift.

7. Schiene nach einem der Ansprüche 1 bis 6, dadurch gekennzeichnet, daß der Riegel (32) durch ein geschlossenes Lager (322) auf der Achse (22) angebracht ist, und dadurch, daß die Fallklinke (42) auf der Achse (22) durch ein Lager (422) angebracht ist, das zu einer Seite der Translationsrichtung (100) hin geöffnet ist.

8. Schiene nach einem der Ansprüche 1 bis 7, dadurch gekennzeichnet, daß der Schließhaken (31) und der Auffangboden (41) von einer am ortsfesten Element (10) befestigten Rippe (12) getragen werden.

9. Schiene nach einem der Ansprüche 1 bis 8, dadurch gekennzeichnet, daß das ortsfeste Element (10) mit Lippen (102) und das bewegliche Element (20) mit Gegenlippen (202) versehen sind, die dazu bestimmt sind zusammenzuwirken, um zur Translationsrichtung (100) orthogonale Kräfte aufzunehmen und auch zu übertragen.
